# EUROPÄISCHE PATENTANMELDUNG

(11) **EP 1 363 216 A1**
(43) Veröffentlichungstag der Anmeldung: **19.11.2003**
(21) Anmeldenummer: 03005021.5
(22) Anmeldetag: 06.03.2003
(51) Int. Cl.: G06F 17/60

(54) **Verfahren zur handwerklichen Dienstleistungsplanung**

(30) Priorität: 15.05.2002 DE 10221464
(71) Anmelder: Malerwerkstätten, Heinrich Schmid Gmbh & Co. KG, 72764 Reutlingen (DE)
(72) Erfinder: Schmid, Carl-Heiner, Dr., 72764 Reutlingen (DE)
(74) Vertreter: Möbus, Daniela, Dr.-Ing.

(57) **Zusammenfassung**

Ein Verfahren zur Aufbereitung von Daten für eine handwerkliche Dienstleistungsplanung durch eine Datenverarbeitungseinrichtung, bei dem die
- Gesamtdienstleistung in Einzeldienstleistungen aufgeteilt und
- mindestens die benötigte Abarbeitungszeit pro Einzeldienstleistung berechnet und abgespeichert und eine Zusammenfassung von in einem Sachzusammenhang stehenden Einzeldienstleistungen zu Arbeitspaketen nach einem vorgebbaren Algorithmus durchgeführt wird.

## Beschreibung

Die Erfindung betrifft ein Verfahren zur Aufbereitung von Daten für eine handwerkliche Dienstleistungsplanung.

Bisher bekannte Systeme zur Planung von komplexen Abläufen auf Baustellen ermöglichen die Berücksichtigung vielfältiger Parameter, beispielsweise die Art der zu erbringenden Leistung, die Anzahl oder Menge dieser Leistung, die erforderlichen Materialien und Werkzeuge sowie die Anzahl der Mitarbeiter und die Kosten. Bei den Systemen handelt es sich um Software-Pakete mit zum Teil umfangreichen Datenbanken, in denen Referenzwerte wie durchschnittlicher Zeitaufwand für eine zu erbringende Leistung, durchschnittlicher Materialverbrauch und Ähnliches abgespeichert sind. Mit diesen bekannten Systemen lassen sich im Prinzip also der Zeitaufwand, der Materialverbrauch, die Anzahl der Mitarbeiter und die Kosten einer Baustelle ermitteln.

Es hat sich jedoch gezeigt, dass insbesondere bei großen Baustellen die mit den bekannten Systemen ermittelten Daten für die gesamte Arbeitszeit, die Kosten usw. relativ ungenau sind. Umso größer und komplexer die Baustelle und ihr Ablauf ist, umso ungenauer sind auch die ermittelten Daten.

Der vorliegenden Erfindung liegt die Aufgabe zugrunde, ein Verfahren zu schaffen, mit dem zuverlässige Daten, insbesondere über die Arbeitszeit einer Baustelle im Vorfeld ermittelt und abgespeichert werden können, wobei diese abgespeicherten Daten dann in vielfältiger Weise beispielsweise zur Erstellung eines Kostenvoranschlags weiterverarbeitet werden können.

Ein weiteres Ziel der Erfindung liegt in der Möglichkeit der Anpassung einer Baustellenplanung während der Ausführung der einzelnen Gewerke.

Die Aufgabe wird mit einem Verfahren zur Aufbereitung von Daten für eine handwerkliche Dienstleistungsplanung durch eine Datenverarbeitungseinrichtung gelöst, das gekennzeichnet ist durch die Schritte:
- Aufteilung der Gesamtdienstleistung oder mindestens einer Leistungsposition der Gesamtdienstleistung in eine oder mehrere Einzeldienstleistungen und Eingabe des Leistungsumfangs, beispielsweise der Quadratmeterzahl einer handwerklich zu bearbeitenden Fläche, je Einzeldienstleistung in eine Datenverarbeitungseinrichtung;
- Berechnung mindestens der benötigten Abarbeitungszeit pro Einzeldienstleistung aus dem Leistungsumfang und aus in der Datenverarbeitungseinrichtung abgespeicherten Daten über die durchschnittliche Abarbeitungszeit je Leistungsumfangseinheit für die jeweilige Einzeldienstleistung;
- Abspeichern der benötigten Abarbeitungszeit pro Einzeldienstleistung durch die Datenverarbeitungseinrichtung;
- Zusammenfassung mehrerer Einzeldienstleistungen, die in einem Sachzusammenhang, insbesondere einem räumlichen, zeitlichen, witterungsmäßigen oder Mitarbeiter bezogenen Zusammenhang stehen, zu Arbeitspaketen nach einem vorgebbaren Algorithmus, wobei der oder die Sachzusammenhänge anhand von Eingabeparametern und/oder abgespeicherten Parametern erkannt werden;
- Berechnung und Abspeicherung mindestens der Abarbeitungszeit je Arbeitspaket.

Das erfindungsgemäße Verfahren zeichnet sich also insbesondere dadurch aus, dass die Gesamtdienstleistung oder einzelne Leistungspositionen wie Streichen, Verputzen etc. in Einzeldienstleistungen aufgeteilt wird und aus den Einzeldienstleistungen dann Arbeitspakete geschnürt werden. Die Arbeitspakete werden aus Einzeldienstleistungen derart kombiniert, dass sie den Arbeitsabläufen auf der Baustelle entsprechen. Dabei können die wirklichen Abläufe der Abarbeitung inklusive Rüstzeiten, Wartezeiten und Abarbeitungszeiten von anderen Gewerken berücksichtigt werden. Auch räumliche Einflüsse wie Raumhöhen und Raumflächen sowie Witterungseinflüsse können zumindest in statistischer Hinsicht mit einfließen. Außerdem lassen sich auch Gegebenheiten der Baustelle wie Qualität von Untergründen, Art und Beschaffenheit von Böden und Mauerwerken, Installationen und Anschlüsse sowie Abstell- und Lagerflächen und Lieferwege berücksichtigen. Die Einzeldienstleistungen werden mit Informationen über ihre Abarbeitung, wie beispielsweise Reihenfolge der Abarbeitung, Wetterabhängigkeit, Schwierigkeitsgrad, Rüstzeiten etc. in einer Datenbank auf der Datenverarbeitungseinrichtung hinterlegt. Die durchschnittliche Abarbeitungszeit ist dort für jede Einzeldienstleistung und für jedes Arbeitspaket erfasst. Insgesamt ermöglicht somit das erfindungsgemäße Verfahren eine sehr viel genauere Prognose der Abarbeitungszeit und der Arbeitsabläufe für die Gesamtdienstleistung, beispielsweise die Bearbeitung einer Baustelle.

Die Einteilung und Planung der Gesamtdienstleistung in kleinere Einheiten ermöglicht auch, diese kleineren Einheiten im Nachhinein auf ihre Abarbeitung, das Auftreten von Zeitverzögerungen, höheren Materialverbrauch und etwaige Ablaufsverbesserung zu prüfen. Aus der benötigten Abarbeitungszeit pro Einzeldienstleistung und einer Terminvorgabe kann außerdem die Zahl der zu ihrer Ausführung erforderlichen Mitarbeiter berechnet und abgespeichert werden. Aus der Gesamtabarbeitungszeit und der Abarbeitungszeit für die Einzeldienstleistungen sowie der Mitarbeiterzuordnung lässt sich eine präzise Einsatzplanung der Mitarbeiter generieren.

Neben der Abarbeitungszeit können selbstverständlich aus dem Leistungsumfang auch weitere Kenndaten der Einzeldienstleistungen wie Materialverbrauch, Rüstzeiten, Maschinenbelegzeiten etc. aus in einer Datenbank hinterlegten Parametern und/oder Eingabeparametern berechnet und abgespeichert werden. Dies ist insbesondere dann wichtig, wenn die abgespeicherten Daten anschließend für eine Kostenermittlung herangezogen werden sollen.

Weitere entscheidende Vorteile ergeben sich, wenn die Ist-Werte für die Abarbeitungszeit und/oder andere Kenndaten wie Materialverbrauch während der Bearbeitung der Baustelle in die Datenverarbeitungseinrichtung eingegeben werden und die Datenverarbeitungseinrichtung einen Vergleich dieser Daten mit den abgespeicherten Soll-Daten vornimmt und das Ergebnis abspeichert. Diese Soll-Ist-Wert-Vergleiche ermöglichen eine ständige Kontrolle, ob beispielsweise der aufgestellte Zeitplan eingehalten wird. Falls es zu Abweichungen kommt, kann sofort korrigierend eingegriffen werden, da durch das erfindungsgemäße Verfahren sofort festgestellt werden kann, bei welchem Arbeitspaket und welcher Einzeldienstleistung es zu Abweichungen von den ursprünglich ermittelten Soll-Werten gekommen ist. Bei diesem Arbeitspaket oder der Einzeldienstleistung kann dann gezielt nachgebessert werden, bevor die Planung für weitere Arbeitspakete in Frage gestellt wird.

Falls die Ist-Daten von den Soll-Daten, insbesondere der Abarbeitungszeit für einzelne Einzeldienstleistungen und/oder Arbeitspakete abweichen, kann eine Neuberechnung der Abarbeitungszeit für die zugehörigen Arbeitspakete erfolgen und gegebenenfalls eine Neubildung der noch nicht oder noch nicht vollständig abgearbeiteten Arbeitspakete vorgenommen werden. Die Planung der Baustelle kann also durch die Ist-Daten-Eingabe dynamisch angepasst werden.

Die Ist-Daten und/oder die Abweichungen zu den Soll-Daten können auch statistisch ausgewertet und Paketprofile, Mitarbeiterprofile und/oder Qualitätsprofile oder dergleichen erstellt und in Datenbanken abgelegt werden. Dadurch ist eine Optimierung des gesamten Prozessablaufs möglich. Die erstellten Profile können dabei auch zur Korrektur der in den zugehörigen Datenbanken abgelegten Parameter der Einzeldienstleistungen und Arbeitspakete herangezogen werden. Sie ermöglichen außerdem eine fortlaufende Bewertung und Entwicklung von Mitarbeitern.

Das Ergebnis des Soll-Ist-Wert-Vergleichs kann außerdem zur Korrektur der in der Datenverarbeitungseinrichtung abgespeicherten Daten über die durchschnittliche Abarbeitungszeit oder andere Kenngrößen je Leistungsumfangseinheit und/oder des Algorithmus zur Bildung der Arbeitspakete herangezogen werden. Die Korrektur der Daten und/oder des Algorithmus kann vollständig automatisch erfolgen. Das Verfahren ist dann selbstlernend. Dadurch kann eine bisher nicht erreichte Präzision in der Dienstleistungsplanung erreicht werden.

Der Leistungsumfang der Einzeldienstleistungen kann auch mit Faktoren beispielsweise gemäß dem Schwierigkeitsgrad der Ausführung gewichtet werden. Der Schwierigkeitsgrad kann beispielsweise in leicht, mittel und schwer unterteilt werden. Abhängig davon wird die benötigte Abarbeitungszeit entsprechend niedriger oder höher angesetzt als in der Datenbank abgespeichert.

Aus der abgespeicherten Zahl der Mitarbeiter pro Einzeldienstleistung, der Abarbeitungszeit pro Einzeldienstleistung und in der Datenverarbeitungseinrichtung abgespeicherten Kompatibilitätsparametern der Einzeldienstleistungen über parallele Ausführbarkeit mit anderen Einzeldienstleistungen kann außerdem die Gesamtdauer der Durchführung der Gesamtdienstleistung berechnet und abgespeichert werden.

Auch eine Zuordnung einzelner Mitarbeiter zu den Einzeldienstleistungen kann durch die Datenverarbeitungseinrichtung vorgenommen und abgespeichert werden.

Die Datenverarbeitungseinrichtung kann aus der berechneten Abarbeitungszeit und gegebenenfalls weiteren Parametern wie des Materialverbrauchs und Maschinenbelegungszeiten anhand abgespeicherter Daten über die Kosten einer Arbeitsstunde, einer Maschinenstunde und einer Materialeinheit die Kosten für die Gesamtdienstleistung berechnen und abspeichern.

Die Leistungsumfangsdaten, wie die Materialdaten, die Anzahl der Mitarbeiter sowie die Maschinendaten, die Reihenfolgen, Ablaufdaten und Rüstzeiten können jeweils in gesonderten, durch die Datenverarbeitungseinrichtung miteinander verknüpfbaren Datenbanken abgespeichert werden. Dadurch bleibt der Überblick über die Baustelle gewahrt, ohne die gegenseitigen Verknüpfungsmöglichkeiten der Einzeldatenbanken einzuschränken.

Selbstverständlich kann eine Einzeldienstleistung weiter unterteilt werden in Unterdienstleistungen, um eine noch höhere Genauigkeit bei der Ermittlung der Gesamtabarbeitungszeit für die Gesamtdienstleistung und anderer Kenngrößen der Gesamtdienstleistung zu erzielen. Die Aufteilung der Baustelle in kleine Einheiten (Arbeitspakete), die sich weitgehend aus standardisierten Einzeldienstleistungen zusammensetzen, ermöglicht es auch, Arbeitspakete von unterschiedlichen Baustellen miteinander zu vergleichen.

So können beispielsweise Lackierarbeiten in einem Einfamilienhaus mit Lackierarbeiten in einer Fabrikhalle verglichen werden. Dieses Aufteilen von verschiedenen Baustellen in vergleichbare Einheiten ermöglicht einen bisher nicht gekannten Grad an Transparenz für die Dienstleister und Bauherren.

Die Detaillierung der Dienstleistungsabläufe hat außer dem Vorteil, dass die einzelnen Tätigkeiten hinsichtlich des zeitlichen Aufwandes besser kalkuliert werden können, auch den Vorteil, dass die Einsatzplanung der Mitarbeiter wesentlich effizienter erfolgen kann. So können beispielsweise Lehrlinge gezielt mit Vorarbeiten beauftragt werden, während qualifizierte Fachkräfte mit hochwertigeren Arbeiten betraut werden. Darüber hinaus bietet dieses Vorgehen auch die Möglichkeit, die Mitarbeiter je nach individuellen Leistungsständen zielgerichtet bei bestimmten Arbeiten einzusetzen. Davon profitiert sowohl der Mitarbeiter, der in erster Linie für Arbeiten, die ihm liegen, eingesetzt wird, als auch der Bauherr, da die erforderlichen Arbeiten durch einen auf diesem Gebiet sehr effektiv arbeitenden Mitarbeiter durchgeführt werden, was Arbeitszeit und damit Kosten spart.

Die von der Datenverarbeitungseinrichtung ermittelten und abgespeicherten Daten können in beliebiger Weise weiterverarbeitet werden. Sie können auf einem Drucker oder einem Anzeigegerät ausgegeben werden. Sie können auch an ein Warenbestellsystem weitergeleitet werden. Auch lässt sich mit ihnen vor Beginn der Arbeiten eine komplette Simulation aller Einzeldienstleistungen und Arbeitspakete durchführen.

Die Ein- und Ausgabe der Daten kann drahtlos oder auch drahtgebunden erfolgen. Einige der Leistungsumfangsdaten können auch elektronisch erfasst werden, beispielsweise die Quadratmeterzahl oder die Beschaffenheit des Untergrunds einer handwerklich zu bearbeitenden Fläche.

## Patentansprüche

1. Verfahren zur Aufbereitung von Daten für eine handwerkliche Dienstleistungsplanung durch eine Datenverarbeitungseinrichtung, **gekennzeichnet durch** die Schritte:
- Aufteilung der Gesamtdienstleistung oder mindestens einer Leistungsposition der Gesamtdienstleistung in eine oder mehrere Einzeldienstleistungen und Eingabe des Leistungsumfangs, beispielsweise der Quadratmeterzahl einer handwerklich zu bearbeitenden Fläche, je Einzeldienstleistung in eine Datenverarbeitungseinrichtung;
- Berechnung mindestens der benötigten Abarbeitungszeit pro Einzeldienstleistung aus dem Leistungsumfang und aus in der Datenverarbeitungseinrichtung abgespeicherten Daten über die durchschnittliche Abarbeitungszeit je Leistungsumfangseinheit für die jeweilige Einzeldienstleistung;
- Abspeichern der benötigten Abarbeitungszeit pro Einzeldienstleistung **durch** die Datenverarbeitungseinrichtung;
- Zusammenfassung mehrerer Einzeldienstleistungen, die in einem Sachzusammenhang, insbesondere einem räumlichen, zeitlichen, witterungsmäßigen oder Mitarbeiter bezogenen Zusammenhang stehen, zu Arbeitspaketen nach einem vorgebbaren Algorithmus, wobei der oder die Sachzusammenhänge anhand von Eingabeparametern und/oder abgespeicherten Parametern erkannt werden;
- Berechnung und Abspeicherung mindestens der Abarbeitungszeit je Arbeitspaket.

2. Verfahren nach Anspruch 1, **dadurch gekennzeichnet, dass** aus der benötigten Abarbeitungszeit pro Arbeitspaket und einer Terminvorgabe die Zahl der zu ihrer Ausführung erforderlichen Mitarbeiter berechnet und abgespeichert wird.

3. Verfahren nach Anspruch 1 oder 2, **dadurch gekennzeichnet, dass** aus dem Leistungsumfang weitere Kenndaten der Arbeitspakete wie Materialverbrauch, Rüstzeiten, Maschinenbelegzeiten etc. aus in einer Datenbank hinterlegten Parametern und/oder Eingabeparametern berechnet und abgespeichert werden.

4. Verfahren nach einem der Ansprüche 1 bis 3, **dadurch gekennzeichnet, dass** die Ist-Werte für die Abarbeitungszeit und/oder andere Kenndaten wie Materialverbrauch in die Datenverarbeitungseinrichtung eingegeben werden und die Datenverarbeitungseinrichtung einen Vergleich dieser Daten mit den abgespeicherten Soll-Daten vornimmt und das Ergebnis abspeichert.

5. Verfahren nach Anspruch 4, **dadurch gekennzeichnet, dass** bei einer Abweichung der Ist-Daten von den Soll-Daten von Einzeldienstleistungen und/oder Arbeitspaketen eine Neuberechnung der Abarbeitungszeit der zugehörigen Arbeitspakete und gegebenenfalls eine Neubildung der noch nicht oder noch nicht vollständig abgearbeiteten Arbeitspakete vorgenommen wird.

6. Verfahren nach Anspruch 4 oder 5, **dadurch gekennzeichnet, dass** das Ergebnis des Soll-Ist-Wert-Vergleichs zur Korrektur der in der Datenverarbeitungseinrichtung abgespeicherten Daten über die durchschnittliche Abarbeitungszeit oder andere Kenngrößen je Leistungsumfangseinheit und/oder des Algorithmus zur Bildung der Arbeitspakete herangezogen wird.

7. Verfahren nach einem der Ansprüche 4 bis 6, **dadurch gekennzeichnet, dass** die Ist-Daten und/oder die Abweichungen zu den Soll-Daten statistisch ausgewertet und Paketprofile, Mitarbeiterprofile und/oder Qualitätsprofile oder dergleichen erstellt und in Datenbanken abgelegt werden.

8. Verfahren nach einem der Ansprüche 1 bis 7, **dadurch gekennzeichnet, dass** der Leistungsumfang der Einzeldienstleistungen mit Faktoren gemäß dem Schwierigkeitsgrad der Ausführung der Einzeldienstleistung gewichtet wird.

9. Verfahren nach einem der Ansprüche 1 bis 8, **dadurch gekennzeichnet, dass** aus der Zahl der Mitarbeiter pro Einzeldienstleistung, der Abarbeitungszeit pro Einzeldienstleistung und aus in der Datenverarbeitungseinrichtung abgespeicherten Parametern über die parallele Ausführbarkeit der Einzeldienstleistungen mit anderen Einzeldienstleistungen die Gesamtdauer der Durchführung der Gesamtdienstleistung berechnet und abgespeichert wird.

10. Verfahren nach einem der Ansprüche 1 bis 9, **dadurch gekennzeichnet, dass** die Datenverarbeitungseinrichtung eine Zuordnung einzelner Mitarbeiter zu den Einzeldienstleistungen und/oder den Arbeitspaketen vornimmt und diese Zuordnung abspeichert.

11. Verfahren nach einem der Ansprüche 1 bis 10, **dadurch gekennzeichnet, dass** die Datenverarbeitungseinrichtung aus der berechneten Abarbeitungszeit und gegebenenfalls weiterer Parameter wie des Materialverbrauchs und Maschinenbelegungszeiten anhand abgespeicherter Daten über die Kosten einer Arbeitsstunde, einer Maschinenstunde und einer Materialeinheit die Kosten für die Gesamtdienstleistung berechnet und abspeichert.

12. Verfahren nach einem der Ansprüche 1 bis 11, **dadurch gekennzeichnet, dass** die Leistungsumfangsdaten, wie die Materialdaten, die Mitarbeiter- und die Maschinendaten, Reihenfolgen, Ablaufdaten und Rüstzeiten jeweils in gesonderten, durch die Datenverarbeitungseinrichtung miteinander verknüpfbaren Datenbanken abgespeichert werden.

13. Verfahren nach einem der Ansprüche 1 bis 12, **dadurch gekennzeichnet, dass** die Einzeldienstleistungen in Unterdienstleistungen unterteilt werden.

14. Verfahren nach einem der Ansprüche 1 bis 13, **dadurch gekennzeichnet, dass** die abgespeicherten Daten zusätzlich auf einem Drucker oder einem Anzeigegerät ausgegeben werden.
